Europäisches Patentamt

European Patent Office

Office européen des brevets

(19)

(11) Veröffentlichungsnummer: **0 251 109**
**A2**

(12) **EUROPÄISCHE PATENTANMELDUNG**

(21) Anmeldenummer: **87108936.3**

(22) Anmeldetag: **23.06.87**

(51) Int. Cl.⁴: **C08K 7/10**

(30) Priorität: **25.06.86 DE 3621206**

(43) Veröffentlichungstag der Anmeldung:
**07.01.88 Patentblatt 88/01**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Sterzel, Hans-Josef, Dr.**
**Wasgauring 3**
**D-6701 Dannstadt-Schauernheim(DE)**

(54) **Verbundwerkstoffe aus thermoplastischen Polymeren und Siliciumdioxid-Verstärkungsfasern.**

(57) Verbundwerkstoffe aus temperaturbeständigen thermoplastischen Polymeren und Siliciumdioxid-Verstärkungsfasern mit Durchmessern unter 1.000 nm werden hergestellt durch Polykondensation von Kieselsäure oder Polykieselsäure in der Schmelze oder Lösung des Thermoplasten unter Einfluß eines hohen Schergefälles. Die Kieselsäuren oder Polykieselsäuren werden durch Aussalzen aus wäßriger Lösung in ein organisches Lösungsmittel überführt, das gleichzeitig Lösungsmittel für den Thermoplasten ist.

EP 0 251 109 A2

### Verbundwerkstoffe aus thermoplastischen Polymeren und Siliciumdioxid-Verstärkungsfasern

Es ist bekannt, Kunststoffe mit verstärkenden Fasern wie Glasfasern oder Kohlenstoffasern, aber auch kristallinen anorganischen Fasern auf Basis von Titanaten, Aluminiumoxid oder Siliciumcarbid auszurüsten, um Steifigkeit und Festigkeit dieser Kunststoffe erheblich zu steigern.

Es ist ebenfalls bekannt, daß die mechanischen Eigenschaften des Verbundwerkstoffs mit sinkendem Faserdurchmesser verbessert werden. So steigt die Bruchfestigkeit und Zähigkeit an; die Kerbschlagzähigkeit nimmt zu, weil die Kerbwirkung der Verstärkungsfasern mit sinkendem Durchmesser abnimmt, und die Verbundfestigkeit nimmt mit der dabei steigenden Oberfläche zu. Außerdem nimmt die Festigkeit der Verstärkungsfasern selbst zu, weil bei sinkendem Durchmesser der Anteil an Oberflächenfehlern abnimmt (D.W. von Krevelen, Kautschuk + Gummi, Kunststoffe 37, Jg., Nr. 4/84, Seite 295).

Dem daraus folgenden Bestreben, den Durchmesser der Verstärkungsfasern soweit als möglich abzusenken, stehen jedoch erhebliche Probleme gegenüber: So ist es technisch nicht möglich, Einzelfilamente mit Durchmessern unter 5 $\mu$m ohne Beschädigung zu handhaben. Anorganische Fasern mit Durchmessern um 1 $\mu$m und darunter können gefährliche Erkrankungen der Atmungsorgane auslösen, wen sie frei gehandhabt werden.

Aus diesen Gründen wird bisher in der Praxis nur mit Faserdurchmessern oberhalb 3 $\mu$m (= 3000 nm) gearbeitet.

Nach der DE-A-35 33 574 wird die Aufgabe, anorganische Fasern mit Durchmessern unterhalb 1 $\mu$m in Polymere einzubringen, gelöst, indem die Fasern durch Hydrolyse reaktiver Organometallverbindungen in der Lösung oder Schmelze des Matrixpolymeren unter dem Einfluß eines hohen Schergefälles erzeugt werden.

Als Organometallverbindungen werden dort vor allem Aluminiumalkoxide eingesetzt. Dieses an sich elegante Verfahren weist jedoch den Nachteil auf, daß aus 100 Teilen der dort eingesetzten Aluminiumalkoxide nur ca. 10 bis 20 Teile Aluminiumoxid erzeugt werden; der Rest muß als Alkohol nach der Hydrolyse verdampft werden. Dieser Nachteil konnte bei der Herstellung von Aluminiumoxidfasern in Polymeren bisher noch nicht behoben werden.

Nach dem erfindungsgemäßen Verfahren ist es jedoch möglich, ausgehend von Wasserglas oder Natriummetasilikat, entsprechende Fasern aus Silizium dioxid direkt im Polymeren herzustellen, wobei die Faserdurchmesser oberhalb 1 $\mu$m liegen und das Länge/Durchmesserverhältnis 10 übersteigt. Fasern aus Siliziumdioxid weisen zwar geringere Steifigkeiten und Festigkeiten auf als solche aus Aluminiumoxid, sie haben jedoch den Vorteil der geringeren Dichte mit 2,2 g/cm$^3$ gegenüber 3,9 g/cm$^3$ bei Aluminiumoxid, womit die auf die Dichte bezogenen Eigenschaften gegenüber denen des Aluminiumoxids nur geringfügig abfallen.

Das erfindungsgemäße Verfahren besteht darin, daß man eine Lösung von Kieselsäure und/oder Polykieselsäure in einem organischen Lösungsmittel, das gleichzeitig Lösungsmittel für das Matrixpolymere ist, herstellt und unter Temperatursteigerung und Einwirkung von Scherkräften die SiO$_2$-Fasern im Polymeren herstellt, wobei gleichzeitig das Lösungsmittel abdestilliert wird.

Gegenstand der Erfindung sind Verbundwerkstoffe aus thermoplastischen Polymeren und Siliziumdioxid-Verstärkungsfasern, die Durchmesser unterhalb 1000 nm aufweisen und durch Kondensation von Kieselsäure und/oder Polykieselsäure oder durch Hydrolyse und nachfolgende Kondensation von Polykieselsäureestern in homogener organischer Phase in Gegenwart des thermoplastischen Polymeren unter dem Einfluß eines hohen Schergefälles erzeugt wurden.

Die Überführung von Kieselsäure und/oder Polykieselsäure aus wäßriger Lösung durch Aussalzen in ein organisches Lösungsmittel und die gegebenenfalls anschließende Veresterung der Kieselsäure und/oder Polykieselsäure zur Erhöhung der Lager-und Temperaturstabilität ist beispielsweise in den US-PS 2 395 880, 2 408 654 sowie in J. Polym. Sci., Polym. Chem. Ed., 21 (1), 41-53 (1983) beschrieben.

Dazu wird Wasserglas oder Natriummetasilikat soweit mit Wasser verdünnt, bis der SiO$_2$-Anteil ca. 10 Gew.% beträgt. Diese Lösung läßt man langsam unter starkem Rühren in eine ca. 7 bis 8 %ige Schwefelsäure laufen bis der pH-Wert der Lösung auf 1,7 bis 2 gefallen ist. Das so erhaltene Sol kann sofort in die organische Phase überführt werden, wobei praktisch die monomere Orthokieselsäure erhalten wird.

Man kann das Sol jedoch auch 1 bis 5 h altern lassen, wobei sich durch Polykondensation Polykieselsäuren bilden und anschließend die Polykieselsäuren in die organischen Phase überführen.

Als organische Phase eignen sich Lösungsmittel, die befähigt sind, mit der Kieselsäure oder den Polykieselsäuren Wasserstoffbrückenverbindungen auszubilden und die gleichzeitig gute Lösungsmittel für das Matrixpolymere sind. Dabei handelt es sich vor allem um Verbindungen, die O-und/oder N-Atome aufweisen, die Wasserstoffbrückenbindungen ausbilden können. Solche sind entweder aliphatische Polyether wie
-Diethylenglykolmonobutylether
-Ethylenglykolmonobutylether
-Diethylenglykolmonoethylether
-Diethylenglykolmonomethylether
-Ethylenglykolmonoethylether
-Ethylenglykolmonomethylether
oder Amide wie
-N, N-Dimethylacetamid
-N-Methylpyrrolidon
-N-Cyclohexylpyrrolidon
oder
-Sulfolan
-Diphenylsulfon
oder
-Triphenylphosphit
-Triphenylphosphat
-Trkresylphosphat

Zum Aussalzen der Mono-und/oder Polykieselsäuren gibt man zu ca. 100 Teilen des wäßrigen Sols ca. 30 Teile Kochsalz und ca. 10 Teile des organischen Lösungsmittels. Nach intensivem Rühren bei Raumtemperatur gehen 60 bis 100 % der Kieselsäure in die organische Phase über, die von der wäßrigen Phase abgetrennt wird.

Nach einer Variante des erfindungsgemäßen Verfahrens wird die so erhaltene organische Lösung direkt benutzt, um das Matrixpolymere darin zu lösen. Nach dem Auflösen des Matrixpolymeren im gemeinsamen Lösungsmittel wird die gemeinsame Lösung von Mono-und/oder Polykieselsäuren und Matrixpolymeren einem Extruder zugeführt, wobei unter gleichzeitiger Erwärmung, Scherung und Abziehen des Lösungsmittels und Reaktionswassers die erfindungsgemäßen Werkstoffe hergestellt werden.

Als Matrixpolymere kommen vor allem solche in Betracht, die bei Temperaturen oberhalb von 250 bis 300°C verarbeitet werden können, wie Polyamid-6, Polysulfon, Polyethersulfon, Polyamidimid, aromatisches Polyetherimid, aromatische Polyetherketone oder aromatische Polyester.

Das Mengenverhältnis von Polymer zu Kieselsäuren wird so eingestellt, daß der fertige Verbundwerkstoff 1 bis 80 Vol.%, vorzugsweise 5 bis 50 Vol.% $SiO_2$ enthält.

Da Kieselsäuren beim Erwärmen schnell kondensieren können, kann es möglich sein, daß bei der beschriebenen Verfahrensweise eine vorzeitige Abscheidung globulärer und damit unerwünschter Polykieselsäuren zustande kommt. Dies wird mit einer zweiten, bevorzugten Variante umgangen, indem die in der organischen Phase vorhandene Kieselsäure oder Polykieselsäure zusätzlich mit einem einwertigen Alkohol verestert wird.

Dazu wird der organischen Phase eine überstöchiometrische Menge des Alkohols, z.B. n-Propnol, N-Butanol oder t-Butanol, zugesetzt und die Veresterung unter Rühren bei Temperaturen von 50 bis 150°C durchgeführt. Dabei wird zunächst unter vermindertem Druck und entsprechend niedriger Temperatur das Reaktionswasser abgeführt und der mitdestillierte Alkohol zurückgeführt. Zur Entfernung des Reaktionswassers kann auch ein Schleppmittel, wie Toluol oder Chlorbenzol, eingesetzt werden. Im Lauf der Umsetzung wird die Temperatur gesteigert, und die Umsetzung wird solange fortgesetzt, bis kein Reaktionswasser mehr gebildet wird und danach unter weiterer Temperaturerhöhung der überschüssige Alkohol sowie gegebenenfalls das Schleppmittel vom höhersiedenden Lösungsmittel abdestilliert.

In der so erhaltenen Lösung veresterter Kieselsäuren und/oder Polykieselsäuren wird das Matrixpolymere gelöst und die Lösung wie beschrieben dem Extruder zugeführt.

Es ist aber auch möglich, die Lösung der veresterten Kieselsäuren direkt in den Extruder zu pumpen und dort mit der Polymerschmelze zu vermischen.

Im Unterschied zur ersten Variante muß dem Extruder noch Wasser zugeführt werden, um die veresterten Kieselsäuren in Abwesenheit des Matrixpolymeren zu hydrolysieren und damit die Kieselsäuren freizusetzen, welche unter dem Einfluß des Schergefälles $SiO_2$-Fasern mit Durchmessern unterhalb 1 μm ausbilden.

Die Zuführung des Wassers kann als Mischung mit einem organischen Lösungsmittel erfolgen, um die Wasserkonzentration an der Eintrittsstelle niedrig zu halten und um eine vorzeitige Ausfälung des $SiO_2$ infolge über höhter Wasserkonzentration zu vermeiden. Das zur Hydrolyse benötigte Wasser kann auch als Dampf zugeführt werden.

Wesentlich ist, daß mindestens die Endphase der Entgasung im Extruder unter Schergefällen von 50 bis 5000 $s^{-1}$, bevorzugt von 100 bis 1000 $s^{-1}$ stattfindet. Dabei wird die Temperatur über 250°C, vorzugsweise auf 300 bis 400°C angehoben, weil derart hohe Temperaturen zur möglichst vollständigen Kondensation der Kieselsäuren günstig sind. Die Verweilzeit in diesem Temperaturbereich beträgt 1 bis 100 min, bevorzugt 1 bis 15 min.

Unter dem Einfluß des Schergefälles werden die kolloidalen Polykieselsäure-Teilchen in faserige Form gebracht, was mit einer Erhöhung der Oberflächenenergie verbunden ist. Dieser thermodynamisch ungünstigen Form versucht die Polykieselsäure offensichtlich durch weitere Kondensation auszuweichen.

Nach vollständiger Entfernung des Lösungsmittels wird eine granulierfähige Schmelze erhalten. Nach dem Austragen als Strang, Abkühlung und Granulierung und Trocknung kann das Granulat durch die üblichen Kunststoffverarbeitungsverfahren mittels Spritzguß, Extrusion, Formblasen, Tiefziehen oder Verspinnen zu Formkörpern, Profilen, Folien, Hohlkörpern, Fasern oder Überzügen verarbeitet werden.

### Beispiel 1

A. Wasserglas mit einer Dichte von 1,37 $g/cm^3$ wird mit Wasser soweit verdünnt, bis die Lösung 10 % $SiO_2$ enthält. 500 Gew.-Teile dieser Lösung werden unter starkem Rühren langsm zu 380 Gew.-Teilen einer 7,4 %igen Schwefelsäure laufen gelassen. Es entsteht ein Kieselsäure-Sol mit einem ph-Wert von 1,8. Das Sol enthält 60 g $SiO_2$/Lit. Zur Ausbildung von Polykieselsäuren wird es eine Stunde gealtert. Zu 1000 Gew.-Teilen dieses Sols werden 100 Gew.-Teile Trikresylphosphat und 300 Gew.-Teile Kochsalz gegeben und danach eine Stunde intensiv gerührt. Nach Beendigung des Rührens trennen sich die Phasen innerhalb von 1/2 Stunde, und die organische Phase enthält ca. 30 Gew.-Teile $SiO_2$/100 Gew.-Teile organische Phase.

B. In 1000 Gew.-Teilen der organischen Phase des Ansatzes A werden bei 40° C in einem Rührkessel 500 Gew.-Teile Polysulfon auf der Basis von Bisphenol-A und 4,4'-Dichlordiphenylsulfon mit einer relativen Viskosität von 1,57, gemessen an einer 1 %igen Lösung in N-Methylpyrrolidon bei 25°C, gelöst. Die so erhaltene Lösung von Polykieselsäure und Polysulfon in Trikresylphosphat wird in einen Doppelwellenextruder gepumpt. Der Extruder ist aus vier Zonen aufgebaut, und die Dosierung erfolgt in die erste Heizzone. Die Heizzonen werden auf 280°C, 300°C, 320°C und 330°C temperiert. Die zweite und dritte Heizzone sind mit Entgasungsdomen ausgerüstet, aus denen das Trikresylphosphat und Reaktionswasser unter einem Druck im Bereich von 30 bis 40 mbar abdestilliert werden. Zur Erzeugung hoher Schergefälle sind die zweite und dritte Heizzone teilsweise mit Knetelementen bestückt. Die erste und vierte Heizzone enthalten Förderelemente, die einen Vakuumdurchbruch vermeiden.

Die Schneckendrehzahl wird auf 250 U/min (Schergefälle ca. 400 $s^{-1}$) eingestellt, der Förderstrom auf 14 kg/h Lösung.

Am Ausgang des Extruders wird der Polymerstrang abgezogen, durch ein Wasserbad geführt und granuliert.

Das so erhaltene Polysulfon enthält ca. 25 Vol.% Siliziumdioxid (entsprechend ca. 37 Gew.%), in Form von Fasern mit Durchmessern um 15 nm und Längen um 300 nm, entsprechend einem 1/d-Verhältnis von 20.

### Beispiel 2

Zu 1000 Gew.-Teilen der organischen Lösung des Ansatzes A werden 500 Gew.-Teile n-Butanol und 300 Gew.-Teile Toluol gegeben. Diese Mischung wird unter reduziertem Druck (ca. 30 mbar) bei ca. 40°C destilliert, wobei das mitgeschleppte Reaktionswasser abgeschieden wird. Nachdem der Hauptteil des Reaktionswasser über einen Zeitraum von 8 bis 10 h abgeschieden ist, werden Druck und Temperatur über einen Zeitraum von 2 bis 3 h kontinuierlich erhöht, bis die Mischung unter Normaldruck bei ca. 145°C siedet.

Nachdem nach weiteren 5 Stunden kein Wasser mehr abgeschieden wird, wird das überschüssige Butanol und Toluol abgetrennt. In der Endphase der Destillation wird der Druck vermindert, um Reste von n-Butanol und Toluol abzutrennen. Der Veresterungsgrad des erhaltenen Polykieselsäure-n-butyl-esters beträgt ca. 90 bis 95 %.

Zu 1000 Gew.-Teilen der so erhaltenen Lösung einer mit n-Butanol veresterten Polykieselsäure in Trikresylphosphat werden in einem Rührkessel bei 120°C 400 Gew.-Teile Polyethersulfon aus 4,4′ -Dichlordiphenylsulfon und 4,4′ -Dihydroxidiphenylsulfon mit einer relativen Viskosität von 1,54, gemessen an einer 1 %igen Lösung in N-Methylpyrrolidon bei 25°C, gelöst. Das Polyethersulfon wies einen Wassergehalt kleiner als 0,01 % auf.

Die gemeinsame Lösung der veresterten Polykieselsäure und des Polyethersulfons in Trikresylphosphat wird über eine Zahnradpumpe einem Doppelwellenextruder zugeführt.

Der Extruder ist aus sechs Heizzonen aufgebaut, die Zudosierung erfolgt in die erste Zone, in die zweite wird Wasserdampf, mit einer Temperatur von ca. 200°C bei 16 bar über ein Mengenregelventil zugeführt, die vierte und fünfte Heizzone weisen je einen Entgasungsdom auf, durch den Trikresylphosphat und überschüssiger Wasserdampf bei Drucken um 40 bis 60 mbar abgezogen wird. Die dritte, vierte und fünfte Heizzone enthalten Knetelemente, die für hohe Schergefälle und intensive Oberflächenerneuerung sorgen. Das Temperaturprofil von Heizzone 1 und 6 entspricht 250°C, 250°C, 300°C, 330°C, 360°C, 390°C. Die Schneckendrehzahl wird auf 250 U/min (Schergefälle ca. 400 s$^{-1}$) eingestellt, der Förderstrom auf 16 kg Lösung/h, der Dampfstrom auf ca. 2,5 kg/h.

Der abgezogene Polymerstrang wird durch ein Wasserbad geführt und granuliert. Das so erhaltene Polyethersulfon enthält ca. 32 Vol.% Siliziumdioxid (entsprechend ca. 43 Gew.%) in Form von Fasern mit Durchmessern von 10 nm und Längen um 300 nm, entsprechend einem 1/d-Verhältnis von 30.

Beispiel 3 (Vergleich)

Durch Compoundieren mittels eines Doppelwellenextruders wird Polyethersulfon (relative Viskosität in N-Methylpyrrolidon 1 %ig bei 25°C : 1,54) mit Glasfasern bei 370°C vermischt. Der Faseranteil im compoundierten Polymeren beträgt 40 Gew.%, das Maximum des Faserdurchmessers liegt bei 15 μm.

Ergebnisse

Aus den getrockneten Granulaten wurden mittels einer Schneckenspritzmaschine Prüfkörper für die Zugprüfung nach DIN 53 455 (Festigkeit) und DIN 53 457 (Steifigkeit, E-Modul) hergestellt. Die Massetemperatur für das Material aus Beispiel 1 betrug 320°C, die Massetemperatur für die anderen Beispiele 360°C.

In der folgenden Tabelle sind die Meßergebnisse aufgeführt, die zeigen, daß die erfindungsgemäßen Polymerwerkstoffe dem Vergleich nach dem Stand der Technik weit überlegen sind.

| Beispiel | Faser | Faseranteil Gew.% | Zugfestigkeit MPa | E-Modul GPa |
|---|---|---|---|---|
| 1 | SiO$_2$ | 37 | 1400 | 38 |
| 2 | SiO$_2$ | 43 | 1800 | 48 |
| 3 (Vergl.) | Glas | 40 | 165 | 13 |

**Ansprüche**

1. Verbundwerkstoffe aus thermoplastischen Polymeren und Siliziumdioxid-Verstärkungsfasern, dadurch gekennzeichnet, daß die Fasern Durchmesser unterhalb 1000 nm aufweisen und
a) durch Kondensation von Kieselsäure und/oder Polykieselsäure oder
b) durch Hydrolyse und nachfolgende Kondensation von Polykieselsäureestern
in homogener organischer Phase in Gegenwart der thermoplastischen Polymeren unter dem Einfluß eines hohen Schergefälles erzeugt wurden.

2. Verbundwerkstoffe nach Anspruch 1, dadurch gekennzeichnet, daß die Siliziumdioxid-Fasern Durchmesser von 1 bis 100 nm, vorzugsweise 2 bis 50 nm aufweisen.

3. Verbundwerkstoffe nach Anspruch 1, dadurch gekennzeichnet, daß die Siliziumdioxid-Fasern Länge zu Durchmesser-Verhältnisse von 5 bis 1000, vorzugsweise 10 bis 200 aufweisen.

4. Verbundwerkstoffe nach Anspruch 1, dadurch gekennzeichnet, daß der Anteil der Siliziumdioxidfasern im Werkstoff 1 bis 80 Vol.%, vorzugsweise 5 bis 50 Vol.% beträgt.

5. Verbundwerkstoffe nach Anspruch 1, dadurch gekennzeichnet, daß der Thermoplast bei Temperaturen oberhalb 150°C erweicht und aus Polyamid-6, Polysulfon, Polyethersulfon, aromatischem Polyetherimid, Polyamidimid, aromatischen Polyetherketonen oder aromatischen Polyestern ausgewählt ist.

6. Verfahren zur Herstellung der Verbundwerkstoffe nach Anspruch 1, dadurch gekennzeichnet, daß man Kieselsäuren und/oder Ester von Polykieselsäuren mit dem Thermoplasten in organischer flüssiger Phase homogen vermischt, die gegebenenfalls zur Hydrolyse benötigte Menge Wasser zufügt, und die Mischung bei Temperaturen oberhalb von 250°C unter Einwirkung eines Schergefälles von 50 bis 5000 s⁻¹ erwärmt.

7. Verfahren nach Anspruch 6, dadurch gekennzeichnet, daß das Vermischen der Komponenten und die Hydrolyse in einem hochsiedenden polaren organischen Lösungsmittel durchgeführt wird.